Europäisches Patentamt

European Patent Office

Office européen des brevets

(11) Veröffentlichungsnummer: **0 330 166 B1**

## EUROPÄISCHE PATENTSCHRIFT

(45) Veröffentlichungstag der Patentschrift: **27.10.93**

(51) Int. Cl.⁵: **H04B 7/005**

(21) Anmeldenummer: **89103067.8**

(22) Anmeldetag: **22.02.89**

(54) **Verfahren und Anordnung zur Sendeleistungsregelung bei der Nachrichtenübertragung auf dem Funkweg.**

(30) Priorität: **25.02.88 DE 3805979**

(43) Veröffentlichungstag der Anmeldung:
**30.08.89 Patentblatt 89/35**

(45) Bekanntmachung des Hinweises auf die
Patenterteilung:
**27.10.93 Patentblatt 93/43**

(84) Benannte Vertragsstaaten:
**DE FR GB SE**

(56) Entgegenhaltungen:
**EP-A- 0 160 993**
**FR-A- 2 592 256**

(73) Patentinhaber: **SIEMENS AKTIENGESELL-SCHAFT**
**Wittelsbacherplatz 2**
**D-80312 München(DE)**

(72) Erfinder: **Beyrich, Heinrich, Dipl.-Ing.**
**Plettstrasse 7**
**D-8000 München 83(DE)**
Erfinder: **Von der Neyen, Hans-Jürgen,**
**Dipl.-Ing.**
**Damaschkestrasse 63**
**D-8000 München 82(DE)**
Erfinder: **Tanner, Reiner, Dipl.-Ing.**
**Rasso Strasse 1**
**D-8082 Grafrath(DE)**

# Beschreibung

Die Erfindung bezieht sich auf ein Verfahren zur Sendeleistungsregelung bei der Nachrichtenübertragung auf dem Funkweg, insbesondere bei Mobilfunksystemen, in Abhängigkeit von der Übertragungsqualität sowie der Empfangsfeldstärke sowie auf eine Einrichtung zur Durchführung dieses Verfahrens.

Durch die DE-A- 2 102 846 ist ein Verfahren zur Nachrichtenübertragung über Richtfunkstrecken bekannt, bei dem eine Regelung der Sendeleistung in der Weise erfolgt, daß die Sender einer Richtfunkstrecke im schwundfreien Zustand mit verminderter Sendeleistung betrieben werden, und daß beim Auftreten von Schwund die Leistung der Sender automatisch hochgeregelt wird.

Mit einer Anordnung nach der DE-A- 35 08 900 wird für Funkgeräte in Funkfeldern mit einer vornehmlich über Reflexionen erfolgenden Funkversorgung aus einer Feldstärkemessung ein Schaltkriterium gewonnen, das beispielsweise verwendet wird, um bei linienförmigen Funkverbindungen (Zugfunk) einen Suchlauf nach einer besseren Versorgungsfrequenz auszulösen, oder um bei Autotelefonnetzen das Weiterreichen einer bestehenden Funkverbindung von einer Funkzelle zu einer benachbarten einzuleiten.

Ferner ist durch die europäische Patentanmeldung EP-A- 0 217 042 ein Nachrichtenübertragungssystem für elektromagnetische Wellen bekannt, bei dem im Empfänger ein Detektor zum schnellen Erkennen von Schwunderscheinungen angeordnet ist, aus dessen Signalen entsprechend den Schwunderscheinungen gewichtete Schaltschwellen abgeleitet werden, die Schaltkriterien liefern für die unterbrechungsfreie Anschaltung eines vorher wegen Leistungsreduzierung abgeschalteten Diversity-Empfängers.

Diese bekannten Verfahren leiten aus dem Empfangssignal ein Regelkriterium ab und übertragen dieses im Rückkanal zur Gegenstation, so daß diese die Sendeleistung automatisch so einstellen, daß am Empfangsort der Empfangspegel möglichst konstant bleibt. Gleichkanalstörungen, die in zellularen Mobilfunknetzen die Wiederbenutzbarkeit der Frequenzen in anderen Funkzellen und damit die wichtige Eigenschaft der Frequenzökonomie bestimmen, werden vom Regelsystem nicht erkannt und sind daher nicht beeinflußbar. Dies gilt für jede Art von Fremdstörungen, zu denen z. B. auch die Funkenstörungen gehören.

Eine Anordnung mit den Merkmalen des eingangs genannten Verfahrens ist aus der EP-A 0 160 993 bekannt. Diese beschreibt ein Funksystem mit beweglichen und ortsfesten Funkstationen, bei dem digitale Signale übertragen werden und die miteinander verkehrenden Funkstationen die Sendeleistung der jeweils anderen Funkstation in Abhängigkeit von der Übertragungsqualität einstellen. Die digitalen Signale sind mit einem fehlererkennenden oder fehlerkorrigierendem Code codiert bzw. durch ein Codewort verschlüsselt. Als Kriterium für die Übertragungsqualität gilt die Häufigkeit der erkannten oder korrigierten Übertragungsfehler bzw. das Verhältnis aus den Mittelwerten der dabei auftretenden höchsten und zweithöchsten Korrelationsspitzen. Zur Einstellung der Sendeleistung wird zusätzlich auch die Empfangsfeldstärke oder der Phasenjitter berücksichtigt.

Eine entsprechende Vorrichtung zur Sendeleistungsregelung ist ferner durch die FR-A-2 592 256 bekannt.

Der Erfindung liegt die Aufgabe zugrunde, ein Verfahren zur Sendeleistungsregelung für ein Funksystem zu schaffen, mit dem sowohl Leistungsüberschüsse vermieden als auch Fremdstörungen erfaßt werden.

Diese Aufgabe wird gemäß der Erfindung mit einem Verfahren gelöst, bei dem als Regelkriterien für die Regelung der Sendeleistung der Gegenstation eine Kombination aus einer Empfangspegelbewertung und einer Qualitätsbewertung über den aus dem ankommenden Signal ermittelten Phasenjitter benutzt wird, derart, daß unterhalb eines bestimmten, als Sollwert vorgegebenen Empfangspegels die Sendeleistungsregelung nach dem Regelkriterium der Qualität des Empfangssignals erfolgt und oberhalb eines bestimmten Empfangspegels die Sendeleistungsregelung auf das Regelkriterium des Empfangspegels umgeschaltet wird und der Sender der Gegenstation bei Überschreitung bzw. Unterschreitung eines vorbestimmten Sollwertes des Phasenjitters bzw. des Empfangspegels zur Erniedrigung bzw. Erhöhung der Sendeleistung veranlaßt wird.

Bei der Sendeleistungsregelung nach dem Kriterium der Qualität des Empfangssignals unterhalb eines bestimmten Empfangspegels werden Störungen, die sowohl durch einen zu geringen Empfangspegel als auch von Fremdstörungen hervorgerufen werden, erkannt und ermöglichen dem Regelsystem eine optimale Sendeleistungsanpassung an die Gegebenheiten des Funkfeldes. Als Nachteil einer alleinigen Regelung nach dem Kriterium der Signalqualität ergibt sich, daß Verzerrungen des Funksignals, verursacht durch Mehrwegeempfang oder durch die Bewegung mobiler Funkstationen mit der Folge einer parasitären Frequenzmodulation, zu einer die Funkübertragung nicht verbessernden und damit unerwünschten Sendeleistungserhöhung führen können. Durch die Umschaltung der Sendeleistungsregelung auf das Kriterium des Empfangspegels oberhalb eines bestimmten Empfangspegels wird eine unnötige Sendeleistungserhöhung wegen der vorher genannten Signalverzerrungen durch das Funkfeld und durch die Bewegung mobiler Funkstationen vermieden.

Mit diesen Maßnahmen wird Fremdstörungen durch Erhöhung der Sendeleistung entgegengewirkt. Dies ist mit der Regelung nach dem Empfangspegel nicht möglich, da eine Störung sich schon auswirkt, wenn der Störpegel noch unter dem Nutzpegel liegt und daher praktisch keinen Einfluß auf das Regelriterium und damit auf die Regelung hat.

Vorteilhafte Ausgestaltungen und Weiterbildungen des erfindungsgemäßen Verfahrens sowie eine Anordnung zur Durchführung dieses Verfahrens sind in den Unteransprüchen angegeben.

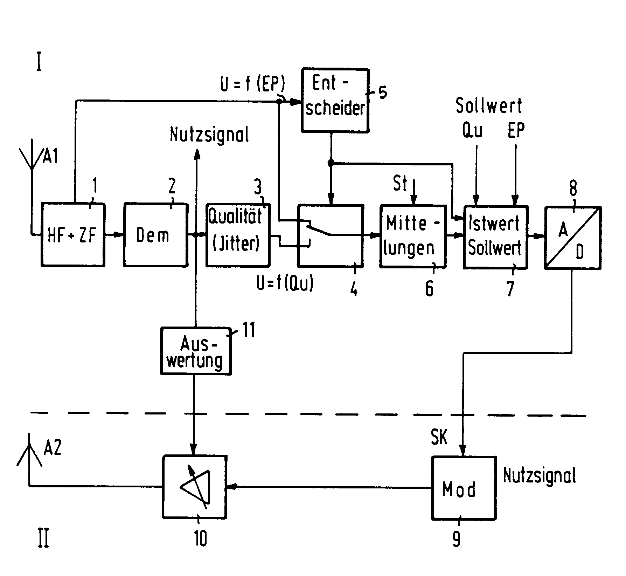

Nachstehend wird die Erfindung anhand eines in der Zeichnung dargestellten Ausführungsbeispiels näher erläutert.

Die Figur zeigt das Blockschaltbild einer Dialogstation, also einer Station eines Nachrichtenübertragungssystems, die mit einer weiteren, entsprechend aufgebauten Gegenstation in Funkkontakt steht.

Die Station besteht aus einem Empfangsteil I und einem Sendeteil II, die jeweils mit einer Antenne A1 bzw. A2 verbunden sind. Im Empfangsteil I ist ein mit der Empfangsantenne A1 verbundener HF + ZF-Teil 1 angeordnet, an dessen einen Ausgang ein Demodulator 2 angeschlossen ist und der ferner einen zweiten, mit einem Entscheider 5 verbundenen Ausgang aufweist. Der Ausgang des Demodulators 2, dem das Nutzsignal entnehmbar ist, ist mit einer Jittermeßeinrichtung 3 zur Überprüfung der Qualität des empfangenen Nutzsignals verbunden. Während in diesem Empfangsweg eine Überwachung der Empfangsqualität ($U = f(Qu)$) erfolgt, wird im zweiten Empfangsweg mit dem Entscheider 5 eine Überwachung des Empfangspegels ($U = f(EP)$) vorgenommen. Der zweite Ausgang des HF + ZF-Teils 1 ist dabei zugleich mit dem einen Umschaltkontakt eines Umschalters 4 verbunden, an dessen zweiten Umschaltkontakt der Ausgang der Jittermeßeinrichtung angeschlossen ist. Dieser Umschalter 4 wird vom Entscheider 5 angesteuert. Der Mittenkontakt des Umschalters 4 ist mit einer Mittelungseinrichtung 6 verbunden, die von einem Steuersignal St angesteuert wird und der eine Istwert-Sollwert-Einrichtung 7 nachgeschaltet ist. Der ebenfalls vom Entscheider 5 angesteuerten Istwert-Sollwert-Einrichtung 7 werden bestimmte Sollwerte für die Qualität Qu und dei Empfangspegel EP vorgegeben, die mit den anstehenden Istwerten verglichen werden. In einem nachfolgenden Analog-Digital-Wandler 8 werden die aus dem Istwert-Sollwert-Vergleich erhaltenen Stellgrößen in Digitalsignale umgewandelt und über einen Signalisierungskanal SK einem im Sendeteil II angeordneten Modulator 9 für das zu übertragende Nutzsignal zugeführt. Dem Modulator 9 ist ein regelbarer Sendeverstärker 10 nachgeschaltet, der mit der Sendeantenne A2 verbunden ist. Ein zweiter Eingang des Sendeverstärkers 10 ist mit einer Auswerteeinrichtung 11 verbunden, die eingangsseitig an den Ausgang des Demodulators 2 im Empfangsteil angeschlossen ist.

Mit dieser Schaltung werden erfindungsgemäß als Regelkriterien für die Regelung der Sendeleistung der Gegenstation eine Kombination aus einer Empfangspegelbewertung und einer Qualitätsbewertung benutzt. Als Qualitätsbewertung dient dabei der Phasenjitter des durch den Empfänger demodulierten Datensignals. Die Ermittlung des Phasenjitters kann dabei in einer Schaltung erfolgen, wie sie Gegenstand der DE-AS 28 46 271 ist.

Bei dem erfindungsgemäßen Verfahren wird der Sender der Gegenstation bei Überschreitung bzw. Unterschreitung eines vorbestimmten Sollwertes des Phasenjitters bzw. des Empfangspegels (die betreffenden Sollwerte werden in der Istwert-Sollwert-Einrichtung 7 eingestellt) zur Erniedrigung bzw. Erhöhung der Sendeleistung um einen bestimmten Wert durch Übertragung einer entsprechenden Information im Rückkanal (Signalisierungskanal SK) veranlaßt. Dabei werden zur Ermittlung der Stellgröße (Regelsignal) nach dem Soll/Istwertvergleich für die Über- und Unterschreitung des Sollwertes unterschiedliche Mittelungen vorgenommen. Hierzu wird die Mittelungseinrichtung 6 durch die Steuersignale St entsprechend angesteuert. Durch die unterschiedlichen Mittelungen des Regelkriteriums kann eine Anpassung der Regelgeschwindigkeit an die veränderlichen Verhältnisse im Funkfeld erfolgen, z. B. mit einer schnellen Aufwärtsregelung für plötzlich einsetzende Störungen und eine langsame Abwärtsregelung zur Verbesserung des Verhaltens des relativ langsamen Regelvorgangs bei kurzzeitig auftretenden Empfangspegelerhöhungen.

Bei Überschreitung eines zusätzlichen Sollwertes des HF-Eingangspegels erfolgt eine durch den Entscheider 5 veranlaßte Umschaltung der Regelung auf das Regelkriterium des Empfangspegels (gezeichnete Schalterstellung in der Figur). Der Sollwert des Empfangspegels liegt dabei höher als der Empfangspegel, der sich mit der Regelung mit dem Phasenjitter als Kriterium einstellt, wenn das Empfangssignal ohne Gleichkanalstörung empfangen wird. Durch die Umschaltung des Regelkriteriums wird ein Leistungsüberschuß bei den Störungen begrenzt, bei denen eine Leistungserhöhung keine Verbesserung der Empfangsqualität bringt, wie das bei Verzerrungen des Funksignals durch die vielfältigen Einflüsse des Funkfeldes der Fall ist.

Über die Auswerteeinrichtung 11 erfolgt die Sendeleistungsregelung der in der Figur gezeigten Station, indem im Empfangssignal enthaltene Regelsignale einer Gegenstation ausgewertet und durch sie eine entsprechende Sendeleistungsregelung der Gegenrichtung über den regelbaren Verstärker 10 erfolgt.

**Patentansprüche**

1. Verfahren zur Sendeleistungsregelung bei der Nachrichtenübertragung auf dem Funkweg, insbesondere bei Mobilfunksystemen, in Abhängigkeit von der Übertragungsqualität sowie der Empfangsfeldstärke
**dadurch gekennzeichnet,**
daß als Regelkriterien für die Regelung der Sendeleistung der Gegenstation eine Kombination aus einer Empfangspegelbewertung und einer Qualitätsbewertung über den aus dem ankommenden Signal ermittelten Phasenjitter benutzt wird, derart, daß unterhalb eines bestimmten, als Sollwert vorgegebenen Empfangspegels die Sendeleistungsregelung nach dem Regelkriterium der Qualität des Empfangssignals erfolgt und oberhalb eines bestimmten Empfangspegels die Sendeleistungsregelung auf das Regelkriterium des Empfangspegels umgeschaltet wird und der Sender der Gegenstation bei Überschreitung bzw. Unterschreitung eines vorbestimmten Sollwertes des Phasenjitters bzw. des Empfangspegels zur Erniedrigung bzw. Erhöhung der Sendeleistung veranlaßt wird.

2. Verfahren nach Anspruch 1,
**dadurch gekennzeichnet,**
daß zur Ermittlung des Regelsignals nach einem Soll-Istwertvergleich unterschiedliche Mittelungen für die Über- und Unterschreitung des Sollwertes vorgesehen sind durch entsprechende Ansteuerung einer Mittelungseinrichtung (6) mittels Steuersignalen (St).

3. Anordnung zur Sendeleistungsregelung bei der Nachrichtenübertragung auf dem Funkweg, insbesondere bei Mobilfunksystem, in Abhängigkeit von der Übertragungsqualität sowie der Empfangsfeldstärke,
**dadurch gekennzeichnet,**
daß im Empfangsteil (I) einer Station ein HF + ZF-Teil (1) mit zwei Ausgängen angeordnet ist, von denen der eine Ausgang mit einem das empfangene Nutzsignal abgebenden Demodulator (2) und einer nachfolgenden Jittermeßeinrichtung (3) und der andere Ausgang mit einem den Empfangspegel ermittelnden Entscheider (5) und einem vom Entscheider (5) gesteuerten Umschalter (4) verbunden ist, dessen zweiter Umschaltekontakt mit dem Ausgang der Jittermeßeinrichtung (3) verbunden ist und dessen Mittelkontakt an eine Mittelungseinrichtung (6) angeschlossen ist, der eine vom Entscheider (5) angesteuerte Istwert-Sollwert-Einrichtung (7) nachgeschaltet ist, deren Ausgangssignal über einen Signalisierungskanal (SK) Übertragungseinrichtungen (9, 10) des Sendeteils (II) zugeführt wird.

4. Anordnung nach Anspruch 3,
**dadurch gekennzeichnet,**
daß im Empfangsteil (I) eine mit dem Demodulatorausgang verbundene Auswerteeinrichtung (11) angeordnet ist, in der von der Gegenstation empfangene Regelsignale ausgewertet werden, über die eine Sendeleistungsregelung der zur Gegenstation abgestrahlten Leistung veranlaßt wird.

**Claims**

1. Method for controlling transmitted power in transmitting information by radio, in particular in mobile radio systems, as a function of the transmission quality and the received field strength, characterized in that as control criteria for controlling the transmitted power of the remote station, use is made of a combination of received level evaluation and quality evaluation via the phase jitter determined from the incoming signal, said use being such that below a specific received level prescribed as desired value the control of transmitted power is performed according to the control criterion of the quality of the received signal and above a specific received level the control of transmitted power is switched over to the control criterion of the received level, and the transmitter of the remote station is caused to decrease or increase the transmitted power upon the overshooting or undershooting of a prescribed desired value of phase jitter or of the received level.

2. Method according to Claim 1, characterized in that for the purpose of determining the control signal in accordance with a desired/actual value comparison, different averaging operations for the overshooting and undershooting of the desired value are provided by driving an averaging device (6) appropriately by means of control signals (St).

3. Arrangement for controlling transmitted power in transmitting information by radio, in particular in mobile radio systems, as a function of the transmission quality and the received field strength, characterized in that there is arranged in the receiving section (I) of a station an RE + IF section (I) having two outputs, of which the one output is connected to a demodulator (2), which outputs the received wanted signal, and a downstream jitter-measuring device (3) and the other output is connected to a decision circuit (5), which determines the received level, and to a changeover switch (4), which is controlled by the decision circuit (5) and whose second changeover contact is connected to the output of the jitter-measuring device (3) and whose centre contact is connected to an averaging device (6), downstream of which there is connected an actual value/desired value device (7) which is driven by the decision circuit (5) and whose output signal is fed via a signalling channel (SK) to transmission devices (9, 10) of the transmitting section (II).

4. Arrangement according to Claim 3, characterized in that there is arranged in the receiving section (I) an evaluation device (11) which is connected to the demodulator output and in which an evaluation is made of control signals which are received from the remote station and which cause the power radiated to the remote station to be subjected to control of the transmitted power.

**Revendications**

1. Procédé pour régler la puissance d'émission lors de la transmission d'informations par voie hertzienne, notamment dans des systèmes de radio mobiles, en fonction de la qualité de transmission ainsi que de l'intensité du champ de réception, caractérisé par le fait qu'on utilise, comme critères de régulation de la puissance d'émission du poste opposé, une combinaison d'une évaluation du niveau de réception et d'une évaluation de la qualité par l'intermédiaire de l'instabilité de phase déterminée à partir du signal arrivant, de telle sorte qu'en dessous d'un niveau de réception donné, prédéterminé en tant que valeur de consigne, la régulation de la puissance d'émission s'effectue selon le critère de régulation de la qualité du signal de réception et qu'au-dessus d'un niveau de réception donné, la régulation de la puissance d'émission est commutée sur le critère de régulation du niveau de réception et l'émetteur du poste opposé est amené à réduire ou accroître la puissance d'émission, lors du dépassement d'une valeur de consigne prédéterminée de l'instabilité de phase ou du niveau de réception ou lorsque l'on passe en dessous de cette valeur de consigne.

2. Procécé selon la revendication 1, caractérisé par le fait que pour la détermination du signal de régulation sur la base d'une comparaison valeur de consigne - valeur réelle, il est prévu différentes formations de la moyenne pour le dépassement de la valeur de consigne et pour le passage en dessous de la valeur de consigne, grâce à une commande correspondante d'un dispositif (6) de formation de la valeur moyenne, à l'aide de signaux de commande (St).

3. Dispositif pour régler la puissance d'émission lors de la transmission d'informations par voie hertzienne, notamment dans des systèmes de radio mobiles, en fonction de la qualité de transmission ainsi que de l'intensité du champ de réception, caractérisé par le fait que dans la partie de réception (I) d'un poste, est disposée une partie (1) haute fréquence + fréquence intermédiaire comportant deux sorties, dont l'une des sorties est raccordée a' un démodulateur (2) délivrant le signal utile reçu et à un dispositif (3) de mesure de l'instabilité, disposé en aval, et dont l'autre sortie est raccordée à un discriminateur (5) déterminant le niveau de réception et à un commutateur (4) qui est commandé par le discriminateur (5), dont le second contact de commutation est relié à la sortie du dispositif (3) de mesure de l'instabilité et dont le contact médian est raccordé à un dispositif (6) de formation de la valeur moyenne, en aval duquel est branché un dispositif (7) de comparaison valeur réelle - valeur de consigne qui est commandé par le discriminateur (5) et dont le signal de sortie est envoyé, par l'intermédiaire d'un canal de signalisation (SK), à des dispositifs de transmission (9, 10) de la partie d'émission (II).

4. Dispositif selon la revendication 3, caractérisé par le fait que, dans la partie de réception (I), est disposé un dispositif d'évaluation (11) qui est relié, à la sortie du démodulateur et dans lequel sont évalués des signaux de réglage qui sont reçus par le poste opposé et qui donnent lieu à une régulation de la puissance d'émission rayonnée par le poste opposé.